# EUROPEAN PATENT APPLICATION

(11) **EP 1 174 017 A1**
(43) Date of publication of application: **23.01.2002**
(21) Application number: 01305047.1
(22) Date of filing: 11.06.2001
(51) Int. Cl.: A01D 34/416, A01D 34/74

(54) **Adjustable line trimmer head**

(30) Priority: 20.07.2000 US 620685
(71) Applicant: Ariens Company, Brillion, Wisconsin 54110 (US)
(72) Inventor: Csonka, Bela I., Green Bay, Wisconsin 54313 (US); Damie, Joseph J., Menasha, Wisconsin 54952 (US); Peter, Timothy J., Appleton, Wiscinsin 54915 (US); Prochnow, Perry L., Brillion, Wisconsin 54110 (US)
(74) Representative: Knott, Stephen Gilbert

(57) **Abstract**

A walk-behind string trimmer (10) includes a cutting head (30) having adjustable cutting heights. A plurality of spacers (38,42,46,50) are provided on a cutting shaft (34), and a cutter disk (54) is selectively sandwiched between selected spacers (38,42,46,50) to adjust the height of the cutter disk(54). Suitable cutting line (78) is attached to the cutter disk (54) and is whipped around in response to rotation of the cutting shaft (34) and cutter disk (54). A cup (58) is positioned at the lower end of the cutting shaft (34), and slides along the ground during operation of the trimmer (10). The cup (58) includes a cavity (82) housing a bolt (62), and is designed to wear away to failure without damaging the bolt (62). A bearing (90) may be operatively positioned between the cutting shaft (34) and a cup (58) to reduce wear on the cup (58).

## Description

The invention relates to walk-behind line trimmers.

Walk-behind line trimmers typically include a body or chassis supporting an internal combustion engine. The engine usually includes a vertical crankshaft that is coupled to a cutter shaft to cause the cutter shaft to rotate in response to rotation of the crankshaft. A disk is mounted to the cutter shaft and rotates therewith. Plastic monofilament line is attached to the disk and is whipped around as the disk rotates. The line is used to trim grass and other vegetation.

The present invention provides a walk-behind trimmer including a chassis that is preferably supported by a pair of wheels that are rotatable with respect to the chassis. A handle preferably connects to the chassis to permit an operator to push and pull the trimmer along a portion of ground to be trimmed. An internal combustion engine is supported by the chassis, and includes an output shaft which is preferably the engine's crankshaft. The output shaft is preferably vertically-oriented. A cutter shaft is spaced from the output shaft and is coupled thereto to cause rotation of the cutter shaft in response to rotation of the output shaft. The cutter shaft is preferably vertically-oriented.

A cutter disk is mounted on the cutter shaft and rotates therewith in response to rotation of the engine's output shaft. A cutting line, which is preferably a plastic monofilament line, is interconnected with the cutter disk. As the cutter disk rotates, the cutting line is whipped in a circle to cut vegetation within the path of the cutting line.

Preferably, a plurality of spacers are positioned around the cutter shaft in a stacked configuration. A cup or other retainer may be mounted to the lower end of the cutter shaft to prevent the spacers from slipping off the cutter shaft under the influence of gravity. A bearing may be provided between the cup and the cutter shaft to permit the cup to rotate with respect to the cutter shaft as the cup moves along the ground. The cutter disk is sandwiched between two of the spacers, and the height of the cutter disk is determined by the number of spacers between the cutter disk and the cup. The cutter disk preferably includes ears to which the cutting line is connected. The height at which the cutting line will cut vegetation may be further modified by orienting the ears upwardly or downwardly.

Other features and advantages of the invention will become apparent to those skilled in the art upon review of the following detailed description, claims, and drawings.

Fig. 1 is a perspective view of a trimmer embodying the present invention.

Fig. 2 is an exploded view of the cutting assembly of the trimmer of Fig. 1.

Fig. 3 is a cross-section view of the cup.

Fig. 4 is a cross-section view of a bearing used with the cup.

Before one embodiment of the invention is explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting. The use of "including" and "comprising" and variations thereof herein is meant to encompass the items listed thereafter and equivalents thereof as well as additional items. The use of "consisting of" and variations thereof herein is meant to encompass only the items listed thereafter. The use of letters to identify elements of a method or process is simply for identification and is not meant to indicate that the elements should be performed in a particular order.

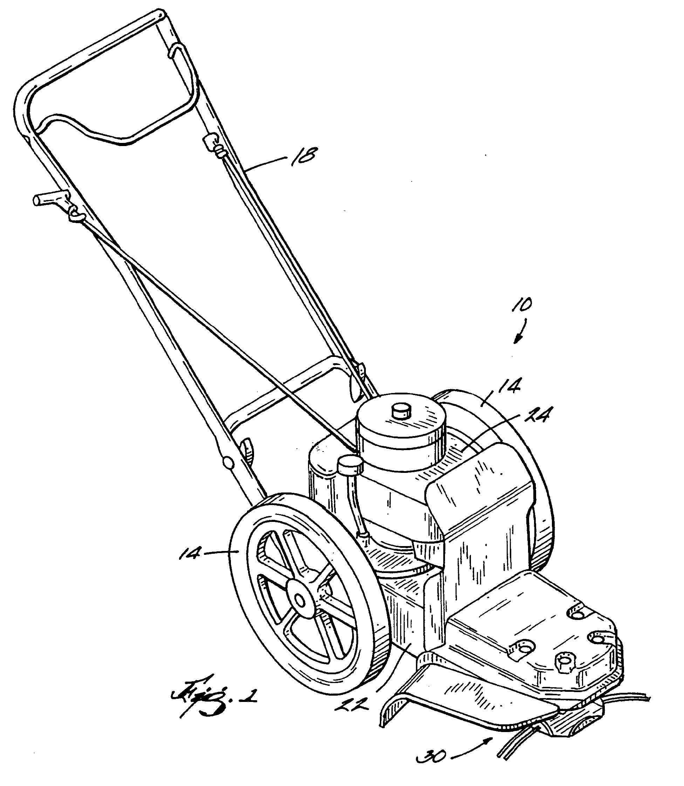

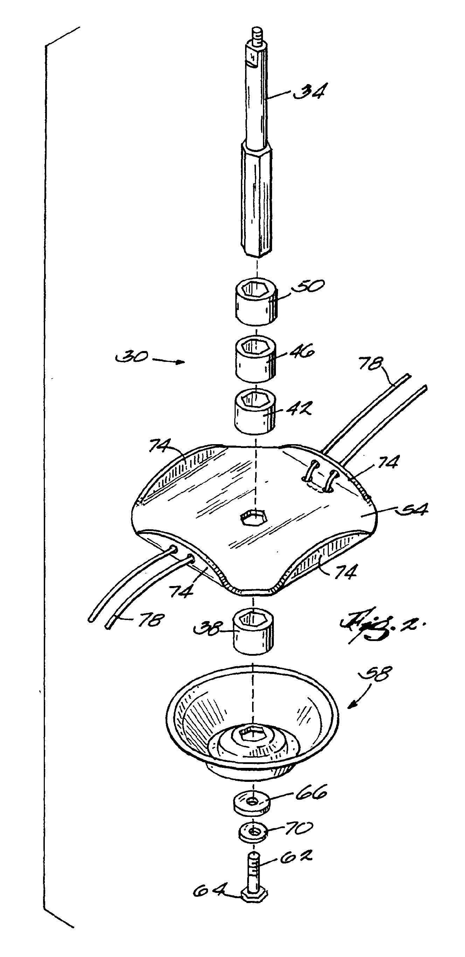

Fig. 1 illustrates a walk-behind line trimmer 10 including a chassis to which a pair of wheels 14 are rotatably mounted, a handle assembly 18, a housing 22, an engine 24, and a cutting assembly 30. Fig. 2 better illustrates the cutting assembly 30, which includes the cutter shaft 34, first, second, third, and fourth spacers 38, 42, 46, 50, respectively, a cutter disk 54, a cup or retainer 58, and a bolt 62. The cutter shaft 34 includes a hexagonal portion that extends through hexagonal bores or apertures in the spacers 38, 42, 46, 50, cutter disk 54, and cup 58. In this regard, the spacers 38, 42, 46, 50, cutter disk 54, and cup 58 are coupled for rotation with the cutter shaft 34. The cutter shaft 34 includes a blind threaded bore into which the bolt 62 is threaded. The bolt head 64 supports the cup 58 by way of a washer 66 and a lock washer 70.

The cutter disk 54 includes a substantially flat portion and ears 74 extending at a substantially 90° angle from the substantially flat portion. Two of the ears 74 include holes through which a cutting line 78 may be passed. The cutting line 78 is preferably monofilament line or some other suitable wearable plastic line. As the cutter disk 54 is rotated by the cutter shaft 34, the cutting lines 78 are whipped around in a circle and cut any vegetation in the path of the cutting lines 78.

The cup 58 is designed to skid along the ground as the line trimmer 10 is pushed or pulled by the operator. The cup 58 preferably is made of a wear-resistant material that may be, for example, heat treated steel. The spacers 38, 42, 46, 50 hold the cutter disk 54 at a selected height above the cup 58, which determines the height at which the cutting lines 78 will cut vegetation.

In its lowest setting, the cutter disk 54 is sandwiched between the first and second spacers 38, 42 (as shown), and is just above the upper rim of the cup 58. The next lowest setting is achieved when the cutter disk 54 is positioned between the second and third spacers 42, 46. The cutter disk 54 may also be positioned between the third and fourth spacers 46, 50 for the highest setting. Additionally, the cutter disk 54 may be turned upside down from the orientation illustrated so that the ears 74 extend downwardly. This provides an additional cutting height at each setting. Preferably, the cutting height is adjustable between 1 3/16 inches and 4 3/8 inches. The cutting height of the trimmer 10 is thus adjustable between distinct and repeatable settings. Of course more spacers having a shorter height may be used to provide more settings for the cutter disk 54.

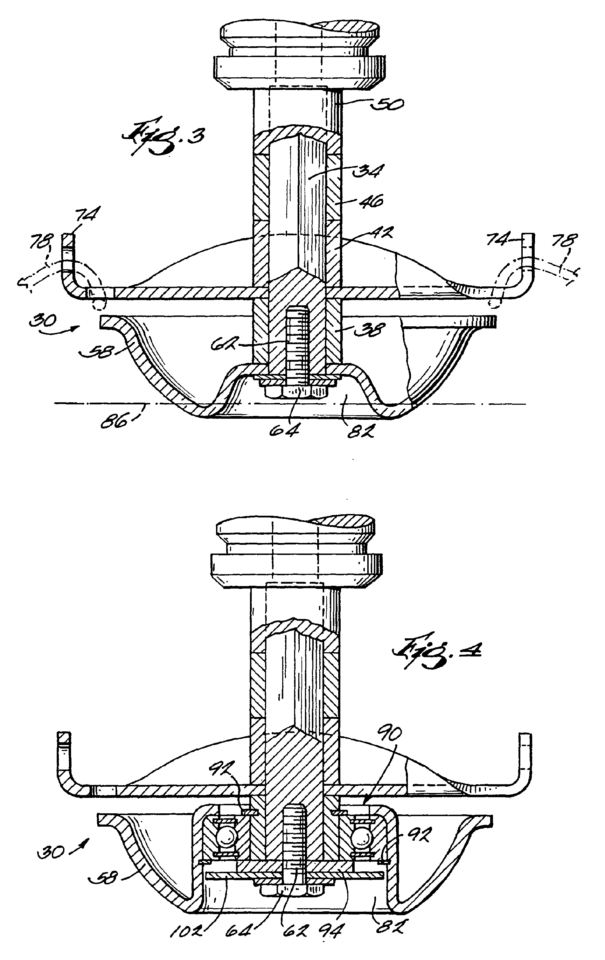

As seen in Fig. 3, the cup 58 includes a recessed portion 82 in which the head 64 of the bolt 62 is located. When the bottom portion of the cup 58 has worn away up to the wear line, indicated by reference numeral 86, the 58 cup will fail without having worn the bolt head 64.

Fig. 4 illustrates an alternative cup constructions in which a bearing 90 is operatively positioned between the cup 58 and the cutter shaft 34. The bearing 90 permits the cup 58 to rotate with respect to the cutter shaft 34, which reduces wear on the cup 58. The outer race of the bearing 90 is preferably press-fit into the recessed portion 82 of the cup 58 so that the outer race of the bearing 90 is fixed with respect to the cup 58. The inner race may be press-fit onto the shaft 34 or the first spacer 38 as illustrated. Alternatively, the shaft 34 may have a shoulder portion that abuts the inner race of the bearing 90, or may have a reduced diameter end portion onto which the inner race of the bearing 90 is press fit. Snap rings 92 may also be provided to hold the bearing 90 in place. A small outer diameter washer 94 is positioned against the bottom of the inner race, and a large outer diameter washer 102 is positioned between the bolt head 64 and the small washer 94. The large washer 102 shields the bearing 90 from debris.

## Claims

1. A walk-behind trimmer (10) **characterized in that** it comprises a chassis, an internal combustion engine (24) mounted to said chassis and having an output shaft, a cutter shaft (34) supported by said chassis and coupled to said output shaft to cause rotation of said cutter shaft (34) in response to rotation of said output shaft, a cutter disk (54) coupled to said output shaft for rotation therewith, and a cutting line (78) interconnected with said cutter disk (54) and whipped in a circular path in response to rotation of said cutter disk (54), and a plurality of spacers (38,42,46,50) positioned around said cutter shaft (34) and supporting said cutter disk (54) at a selected longitudinal position on said cutter shaft (34).

2. The trimmer of claim 1, wherein the longitudinal position of said cutter disk (54) on said cutter shaft (34) is determined by positioning a number of said spacers (38,42,46,50) below said cutter disk (54) and the remainder of said spacers (38,42,46,50) above said cutter disk (54).

3. The trimmer of claim 1, wherein said cutter shaft (34) is substantially vertically disposed, said trimmer further comprising a cup (58) positioned at a lower end of said cutter shaft (34), said retainer (58) retaining said spacers (38,42,46,50) on said cutter shaft (34).

4. The trimmer of claim 3, further comprising a bolt (62) having a bolt head (64), wherein said cup (58) includes a recess (82) and said bolt (62) extends through said cup (58) and is threaded into said cutter shaft (34) with said bolt head (62) being positioned in said recess (82), said recess (82) being sufficiently deep such that said cup (58) will fail due to wear without appreciably wearing any portion of said bolt (62).

5. The trimmer of claim 3, further comprising a bearing (90) operatively positioned between said cup (58) and said cutter shaft (34), said bearing (90) permitting relative rotation between said cup (58) and said cutter shaft (34).

6. The trimmer of claim 1, wherein said cutter disk (54) includes a generally planar portion and at least one ear (74) to which said cutting lines (78) are interconnected, said cutter disk (54) being positionable on said cutter shaft (34) with said ear (74) extending in a selected one of an upwardly and downwardly direction.

7. A walk-behind trimmer (10) **characterized in that** it comprises a chassis, an internal combustion engine (24) mounted to said chassis and having an output shaft, a generally vertically-disposed cutter shaft (34) supported by said chassis and coupled to said output shaft to cause rotation of said cutter shaft (34) in response to rotation of said output shaft, and a cup (58) attached to the lower end of said cutter shaft (34) and adapted to slide along the ground during operation of said trimmer (10), and a bearing (90) operatively positioned between said cup (58) and said cutter shaft (34), said bearing (90) facilitating rotation of said cup (58) with respect to said cutter shaft (34).

8. The trimmer of claim 7, wherein said cup (58) includes a recessed portion (82), and wherein said bearing (90) includes an outer race that is press fit into said recessed portion (82).

9. The trimmer of claim 7, wherein said cutter shaft (34) includes a reduced diameter end portion, and wherein said bearing (90) includes an inner race press fit onto said reduced diameter end portion.

10. The trimmer of claim 7, wherein said cutter shaft (34) includes a shoulder portion, and wherein said bearing (90) includes an inner race abutting said shoulder portion.
